Europäisches Patentamt

**European Patent Office**

**Office européen des brevets**

(11) Publication number: **0 119 047**
**A1**

## EUROPEAN PATENT APPLICATION

(21) Application number: **84301427.5**

(22) Date of filing: **05.03.84**

(51) Int. Cl.³: **F 01 N 1/08**
**F 01 N 1/16**

(30) Priority: **11.03.83 GB 8306825**

(43) Date of publication of application:
**19.09.84 Bulletin 84/38**

(84) Designated Contracting States:
**BE DE FR GB IT NL SE**

(71) Applicant: **BENDIX LIMITED**
**Douglas Road**
**Kingswood, Bristol BS15 2NL(GB)**

(72) Inventor: **Waldron, William Thomas**
**53 Rectory Close**
**Yate Bristol BS17 5SD(GB)**

(74) Representative: **Turner, Alan Reginald**
**c/o Bendix Limited Douglas Road**
**Kingswood, Bristol BS15 2NL(GB)**

(54) **Air dryer silencer.**

(57) A noise reducing device for use in the vent aperture (1) of a purge valve of an air dryer for compressed air system comprises a plurality of resiliently deformable gas permeable silencing elements (6) which are able to deflect under pressure to allow gas to pass around the outside thereof and permit continued operation of the purge valve despite blockage of the silencing elements.

FIG.1

Noise Reducing Device

This invention relates to a noise reducing device and relates particularly to such a device for use in gas cleaning apparatus.

A particular form of gas cleaning device is employed in compressed air systems, particularly compressed air braking systems for vehicles, for removing undesirable moisture and other suspended contaminants. Such a device is desirable to prevent contaminants causing corrosion and/or undue wear and clogging of valves and actuators of the system.

A typical such cleaning device consists of a specially constructed air-dryer containing desiccant material through which air is driven by a compressor on its way to one or more storage reservoirs. The air dryer is usually provided with a purge valve which operates at suitable intervals to discharge a controlled volume of air through the desiccant and out via a noise reducing discharge device to atmosphere. Such noise reducing devices may themselves tend to become clogged and thereby impair the operation of the air dryer.

According to the present invention there is provided a noise reducing device comprising one or more elements of gas permeable impulse noise suppressing material covering an aperture and being resiliently deflectable away from the aperture under more than a predetermined

0119047

pressure to release accumulated obstructing contaminant material.

In order that the invention may be more clearly understood and readily carried into effect the same will be further described by way of example with reference to the accompanying drawings of which:

Fig. 1 illustrates a section of a noise reducing device according to the invention.

Fig. 2 is a section through A-A of Fig. 1 and,

Fig. 3 illustrates the manner of utilising such a device in an air dryer of the kind employed in vehicle air braking systems.

Fig. 4 illustrates a section through an alternative noise reducing device,

Fig. 5 illustrates an upward view into the device of Fig. 4, with the lower cover removed.

Fig. 6 illustrates a section through a circular form of noise reducing device with a single gas permeable element and,

Fig. 7 illustrates a section through an alternative circular form of such device with two gas permeable elements arranged in series.

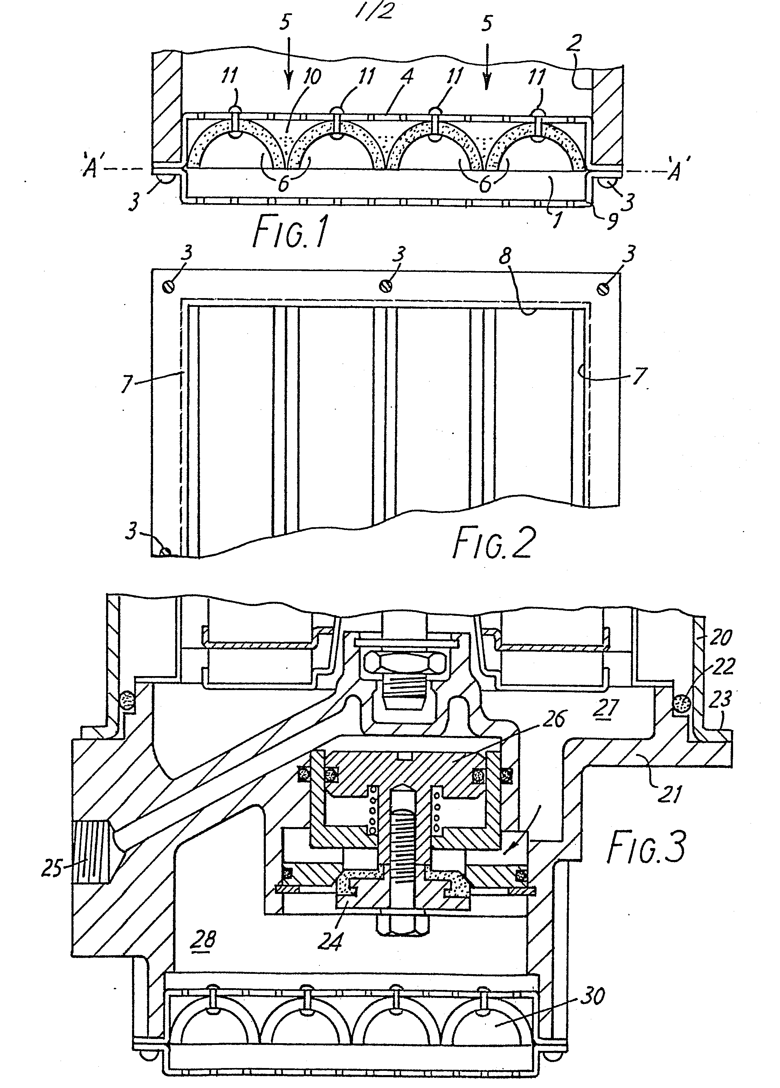

Referring to Fig. 1 and Fig. 2 a rectangular aperture 1 is provided by a peripheral boundry wall 2 and mounted across the apertures by means of screws 3 there is a pressing in the form of an inner perforated support member 4 with peripheral upstanding facing pairs of sides 7 or 8 and an outer perforated protective perforated cover 9. The normal direction of air flow in operation is in the direction of the arrows 6 and on the down-stream side of the plate 4 there are retained by rivets four semi-circular sections of resiliently deformable gas-permeable noise suppressing elements 6 formed of half-cylindrical channel sections the edges of which tightly engage each other or the upstanding facing pair of sides 7. The ends of these elements are sealingly bonded to the other upstanding facing pair of sides 8 and the elements 6 are sufficiently rigid that when new and unblocked by contaminants they are not deformed by the operating pressure differentials. The elements 6 are of sintered porous plastic material known as "VYON".

In operation of the noise reducing device, pulses of purge air applied in the direction of arrows 5 to the upper surface of the perforated plate 4 are smoothed and discharged via the perforations in the plate 4 and then relatively noiselessly through the pores of the gas permeable elements 6. Accumulated fine particles and any finely divided oil droplets discharged with the air will tend to progressively to block these elements whilst any larger particles will tend to settle in the valleys formed between the elements as at 10. If excessive blockage of the pores takes place the pressure build up during purging will be such as to deflect the resilient elements 6 and to discharge the larger particles residing in the valleys and so allow the noise suppression elements still to permit air to pass but with reduced noise-reduction efficiency.

A typical purge valve assembly of an air dryer with such a noise reduction device 30 is as shown in Fig. 3, wherein part of the main air dryer housing is shown at 20. The purge valve assembly comprises a casting 21 mounted with an 'O' ring seal 22 against flange 23 and includes a spring biassed valve 24 actuable by a piston 26 which operates in response to air pressure signal at a port 25 to discharge air from purge volume 27 through the noise reduction device 30 to atmosphere. The lower end of the casting 20 is provided with a rectangular outlet port 28 within which the noise reducing device such as described with reference to Figs. 1 and 2 is assembled. The operation of such an air dryer is described in greater detail in Applicants Published Technical Pamphlet No. 10/011 dated 8th August 1980 entitled "Air Dryer".

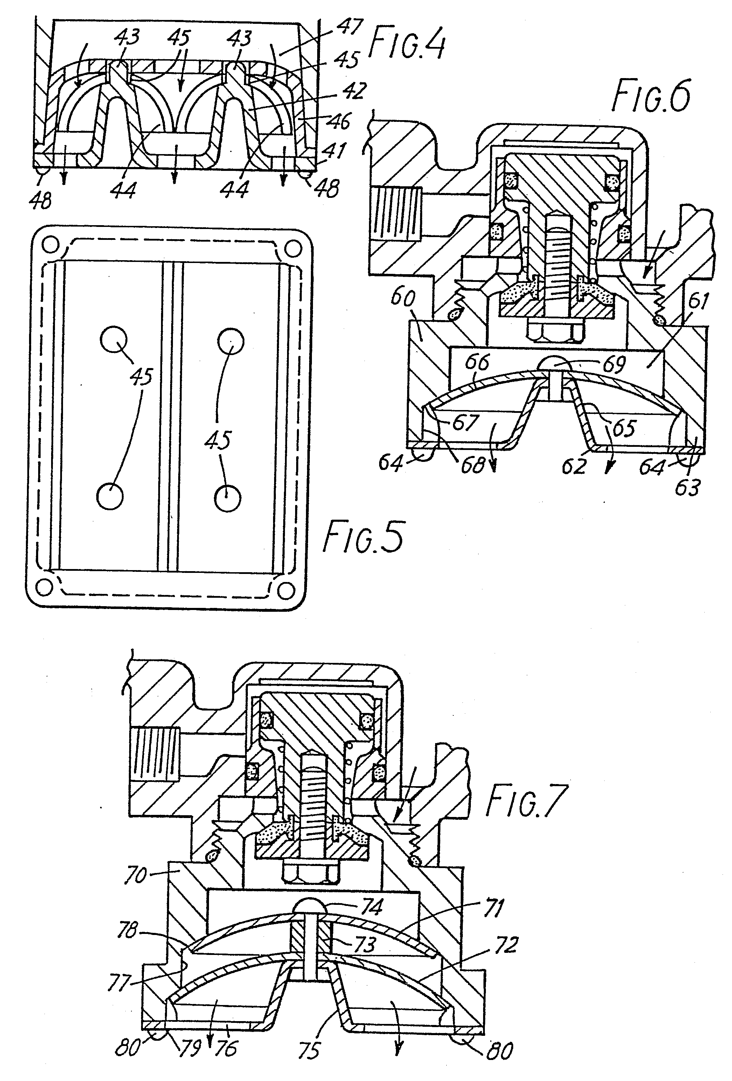

An alternative noise reducing device as shown in Figs. 4 and 5 is arranged to be more easily assembled than the device of Figs. 1 and 2 and it will be seen that the perforated cover, now denoted by reference 41, is formed with two parallel upwardly projecting ridges 42 which in their turn carry a plurality of locating projections 43. In the arrangements shown two half cylindrical noise suppressing elements 44 are provided with locating apertures 45, which register and are locatable by the projections 43. Furthermore, the inner

0119047

perforated plate now denoted by reference 46 is in its turn also provided with corresponding locating apertures into which the projections 43 project so as to locate the suppressing elements which are clamped between the ridges 42 and the inner plate 46.

As in the case of Fig. 1 the sizes of the two half-cylindrical suppressing elements 44 are chosen to afford a tight fit within the outer periphery of the inner perforated plate 46. Accordingly, in normal operating conditions the major part of air purged from a valve device such as that shown in Fig. 3, passes through rather than around the suppressing element. Only in the event of substantial blockage of the porous elements 44 is any appreciable air discharged between or around these elements by virtue of the pressure differential created across them.

Whilst in the arrangement shown in Figs. 4 and 5 only two half cylindrical suppressing elements are provided further such elements arranged parallel with these two may be incorporated if desired to provide a greater discharge area.

Referring now to Fig. 6 this is more particularly of interest where it is desirable to provide a generally circular discharge outlet 61 and as seen in the drawing a screw-in purge valve and vent assembly 60 has a single perforated plate 62 attached to the outlet annular surface 63 by screws 64, the plate 62 being provided with a central upstand 65 to which a saucer-shaped noise suppressing element 66 is attached by a rivet 69. The element 66 is a resiliently deformable gas-permeable element and in normal operation is sufficiently tightly pressed against the inner annular shoulder 67 of the cylindrical surface 68 to prevent any appreciable normal discharge of air around the periphery thereof. Again, when new and free of blockage by contaminants the element 66 is not deformed by operating pressure differentials but is resiliently deflectable from the annular shoulder 67 by excessive pressure if blockage occurs.

In a further development of the arrangements of Fig.6, as shown in Fig. 7, two or more resiliently deformable gas-permeable noise suppressing elements such as 71 and 72 of the purge valve and vent assembly 70 may be arranged in series supported by a suitable spacer 73 there between located on fixing means in the form of a rivet 74 carried by the central upstand 75 of perforated end plate 76, attached by screws 80. The element 71 is of smaller diameter than an intermediate bore 77, and is pressed firmly against an annular shoulder 78 whereas element 72 is of greater diameter than 77 and pressed firmly against an annular shoulder 79. In such an arrangement by virtue of the two or more suppressing elements with air spaces there between, even greater initial noise suppression may be achieved and longer service life before complete blockage of the gas-permeable material of each suppression element

- 7 -

0119047

is to be expected.

Although the gas permeable suppressing elements employed in the foregoing examples are sintered plastics material alternative materials may be employed.

- 1 -

0119047

<u>Claims</u>

1.    A noise reducing device comprising at least one gas-permeable impulse noise suppressing elements (6; 44; 66; 71, 72) covering an aperture (1, 47, 67) and characterised by said element being deflectable by more than a certain pressure differential to at least partially uncover the aperture.

2.    A noise reducing device as claimed in claim 1, characterised by said noise suppressing element being one of an array of such elements (6; 44) arranged side by side and the outer edges of the array being resiliently engageable with the aperture (1: 47).

3.    A noise reducing device as claimed in claim 2, characterised by the elements of said array comprising a plurality of individually supported side by side channel sections.

4.    A noise reducing device as claimed in claim 2, characterised by the element of said array comprising a plurality of individually supported half-cylindrical channel sections.

5.    A noise reducing device as claimed in claims 1, 2, 3 or 4, characterised by the or each element being retained against an inner perforated support member.

6. A noise reducing device as claimed in claim 5, characterised by the or each element being retained against the support member 46 by inward projections 42 from an apertured outer cover member 41.

7. A noise reducing device as claimed in claim 1 characterised in that said noise suppressing element comprises a centrally retained generally circular element.

8. A noise reducing device as claimed in claim 7 characterised in that said noise suppressing element is one of two such elements (71, 72) spaced apart and one behind the other across the aperture.

9. A noise reducing device as claimed in claim 8 characterised in that one said noise suppressing element 71 is of smaller diameter than an intermediate bore 77 and the other said noise suppressing element 72 is of greater diameter than said bore 77.

FIG.1

FIG.2

FIG.3

FIG.4

FIG.5

FIG.6

FIG.7

0119047

**European Patent Office**

**EUROPEAN SEARCH REPORT**

| DOCUMENTS CONSIDERED TO BE RELEVANT | | EP 84301427.5 |

| Category | Citation of document with indication, where appropriate, of relevant passages | Relevant to claim | CLASSIFICATION OF THE APPLICATION (Int. Cl. ³) |
|---|---|---|---|
| X | WO - A1 - 83/00 723 (BAILEY) <br> * Fig. 1; page 4, line 17 - page 5, line 14 * | 1,5,7 | F 01 N 1/08 <br> F 01 N 1/16 |
| X | DE - B2 - 2 141 136 (BLATT) <br> * Totality * | 1 | |
| X <br> Y | US - A 3 897 852 (HOFFMAN et al.) <br> * Totality * | 1,7 <br> 8,9 | |
| Y | US - A - 3 779 340 (HOFFMAN et al.) <br> * Fig. 10 * | 8,9 | |
| A | GB - A - 2 008 194 (DELTA MATERIALS RESEARCH) | | TECHNICAL FIELDS SEARCHED (Int. Cl. ³) <br><br> F 01 N 1/00 <br> F 01 N 3/00 <br> B 60 T 17/00 |

The present search report has been drawn up for all claims

| Place of search | Date of completion of the search | Examiner |
|---|---|---|
| VIENNA | 28-05-1984 | PIPPAN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82